# FASCICULE DE BREVET EUROPEEN

(11) **EP 3 236 429 B1**
(45) Date de publication et mention de la délivrance du brevet: **09.01.2019**
(21) Numéro de dépôt: 17166756.1
(22) Date de dépôt: 18.04.2017
(51) Int. Cl.: G07C 9/00

(54) **MÉTHODE ET SYSTÈME D'ACCÈS SÉCURISÉ À UN VEHICULE**
METHODE UND SYSTEM EINES GESICHERTEN ZUGANGS ZU EINEM FAHRZEUG
METHOD AND SYSTEM FOR SECURE ACCESS TO A VEHICLE

(30) Priorité: 19.04.2016 FR 1653459
(43) Date de publication de la demande: 25.10.2017
(73) Titulaire: Dura Operating, LLC, Auburn Hills, MI 48326 (US)
(72) Inventeur: THOORIS, Arnaud Georges, 92190 MEUDON (FR); ROCHÈS, Mickaël, 78470 SAINT-REMY-LÈS-CHEVREUSE (FR)
(74) Mandataire: Cabinet Laurent & Charras

(56) Documents cités:
- EP-A1- 1 569 482
- EP-A1- 2 743 868
- WO-A2-2014/014945
- US-A1- 2004 064 698
- US-A1- 2013 259 232
- US-A1- 2014 169 564

## Description

La présente invention concerne une méthode et un système d'accès à un véhicule, utilisable par différents utilisateurs. L'invention concerne également une application informatique dédiée.

Le domaine de l'invention est celui des véhicules automobiles équipés d'un dispositif d'entrée sans clé (« *keyless entry system* » en anglais).

De manière connue, un tel dispositif d'entrée sans clé est associé à une carte électronique, portée par un utilisateur du véhicule. Cette carte est configurée pour établir une communication sans fil avec le dispositif d'entrée sans clé, autorisant l'utilisateur à accéder au véhicule, lorsque la carte est située à une distance prédéterminée du dispositif.

De nos jours, il est connu d'utiliser un téléphone mobile en remplacement de la carte électronique. Une application informatique dédiée est installée sur le téléphone, lui permettant ainsi d'établir une communication sans fil avec le dispositif d'entrée sans clé. Cela permet de réduire le nombre de dispositifs électroniques portés par le conducteur.

En pratique, plusieurs utilisateurs peuvent se prêter et piloter tour à tour un même véhicule. Echanger une carte électronique nécessite une rencontre physique entre les utilisateurs.

En revanche, échanger une clé d'identification numérique permettant d'accéder au véhicule ne nécessite pas de rencontre physique. Un tel échange peut être réalisé par exemple via les téléphones mobiles des utilisateurs, solution décrite par exemple dans les documents EP2743868 A1 et US2013259232.

Ainsi, les accès aux véhicules sont de plus en plus basés sur une transmission sans fil de données numériques, et de moins en moins sur l'utilisation d'un accessoire matériel tel qu'une clé de métal.

Les échanges de données numériques doivent être aussi sécurisés que possible, afin d'éviter leur interception par un tiers mal intentionné.

Le but de la présente invention est de proposer une méthode et un système d'accès sécurisé à un véhicule automobile.

A cet effet, l'invention a pour objet une méthode d'accès à un véhicule, comprenant une phase préliminaire incluant les étapes suivantes :
a1) fournir le véhicule, qui est pilotable par différents utilisateurs, incluant un utilisateur principal et un utilisateur secondaire, qui est équipé d'un dispositif d'entrée sans clé, et qui stocke une clé maître, une clé primaire, une clé secondaire et une clé tertiaire ;
a2) fournir un serveur de données distant, qui stocke des données serveur incluant des informations d'identification de l'utilisateur principal, une courbe elliptique de cryptage, la clé maître, la clé primaire, la clé secondaire et la clé tertiaire ;
a3) fournir un premier dispositif personnel qui appartient à l'utilisateur principal, qui comprend une application configurée pour se connecter au dispositif d'entrée sans clé et au serveur, et qui stocke les informations d'identification de l'utilisateur principal et la courbe elliptique de cryptage ;
la méthode d'accès comprenant ensuite une phase d'échange de données incluant les étapes successives suivantes :
b1) l'application installée sur le premier dispositif personnel envoie les informations d'identification de l'utilisateur principal au serveur ;
b2) le serveur reconnaît les informations d'identification de l'utilisateur principal ;
b3) le serveur génère des données serveur cryptées en utilisant la courbe elliptique de cryptage pour le cryptage, les données serveur cryptées incluant la clé secondaire, la clé tertiaire, et une clé maître cryptée en utilisant la clé primaire pour le cryptage;
b4) le serveur envoie les données serveur cryptées au premier dispositif personnel ;
b5) le premier dispositif personnel utilise la courbe elliptique de cryptage pour décrypter les données serveur cryptées, de sorte que le premier dispositif personnel stocke la clé secondaire, la clé tertiaire, et la clé maître cryptée ;
la méthode d'accès comprenant ensuite une phase d'accès incluant les étapes successives suivantes :
c1) l'application installée sur le premier dispositif personnel exécute une procédure de connexion sécurisée au véhicule, en mettant en oeuvre la clé tertiaire ;
c2) si la procédure de connexion sécurisée réussit, l'application installée sur le premier dispositif personnel transmet la clé maître cryptée au véhicule;
c3) le véhicule utilise la clé primaire pour décrypter la clé maître cryptée ;
c4) après décryptage, le véhicule reconnaît la clé maître et commande le dispositif d'entrée sans clé, de sorte que l'utilisateur principal peut accéder au véhicule grâce à l'application installée sur le premier dispositif personnel.

L'invention a également pour objet une méthode d'accès à un véhicule, comprenant une phase préliminaire incluant les étapes suivantes :
a1) fournir le véhicule, qui est pilotable par différents utilisateurs, incluant un utilisateur principal et un utilisateur secondaire, qui est équipé d'un dispositif d'entrée sans clé, et qui stocke une clé maître, une clé primaire, une clé secondaire et une clé tertiaire ;
a2) fournir un serveur de données distant, qui stocke des données serveur incluant des informations d'identification de l'utilisateur principal, une courbe elliptique de cryptage, la clé maître, la clé primaire, la clé secondaire et la clé tertiaire ;
a3) fournir un premier dispositif personnel qui appartient à l'utilisateur principal, qui comprend une application configurée pour se connecter au dispositif d'entrée sans clé et au serveur, et qui stocke les informations d'identification de l'utilisateur principal et la courbe elliptique de cryptage ;
a4) fournir un second dispositif personnel qui appartient à l'utilisateur secondaire, qui comprend une application configurée pour se connecter au dispositif d'entrée sans clé, et qui stocke des informations d'identification de l'utilisateur secondaire et la courbe elliptique de cryptage ;
la méthode d'accès comprenant ensuite une phase d'échange de données incluant les étapes successives suivantes :
b1) l'application installée sur le premier dispositif personnel envoie les informations d'identification de l'utilisateur principal au serveur ;
b2) le serveur reconnaît les informations d'identification de l'utilisateur principal ;
b3) le serveur génère des données serveur cryptées en utilisant la courbe elliptique de cryptage pour le cryptage, les données serveur cryptées incluant la clé secondaire, la clé tertiaire, et une clé maître cryptée en utilisant la clé primaire pour le cryptage;
b4) le serveur envoie les données serveur cryptées au premier dispositif personnel ;
b5) le premier dispositif personnel utilise la courbe elliptique de cryptage pour décrypter les données serveur cryptées, de sorte que le premier dispositif personnel stocke la clé secondaire, la clé tertiaire, et la clé maître cryptée ;
b6) l'application installée sur le second dispositif personnel envoie les informations d'identification de l'utilisateur secondaire à l'application installée sur le premier dispositif personnel ;
b7) l'utilisateur principal accepte de prêter le véhicule à l'utilisateur secondaire ;
b8) l'application installée sur le premier dispositif personnel génère des données d'accès, incluant la clé maître cryptée ;
b9) l'application installée sur le premier dispositif personnel génère des données d'accès cryptées en utilisant la clé secondaire pour le cryptage ;
b10) l'application installée sur le premier dispositif personnel génère des données mobiles cryptées en utilisant la courbe elliptique de cryptage pour le cryptage, les données mobiles cryptées incluant la clé tertiaire, et les données d'accès cryptées;
b11) l'application installée sur le premier dispositif personnel transmet les données mobiles cryptées à l'application installée sur le second dispositif personnel ;
b12) l'application installée sur le second dispositif personnel utilise la courbe elliptique de cryptage pour décrypter les données mobiles cryptées, de sorte que le second dispositif personnel stocke la clé tertiaire et les données d'accès cryptées ;
la méthode d'accès comprenant ensuite une phase d'accès incluant les étapes successives suivantes :
d1) l'application installée sur le second dispositif personnel exécute une procédure de connexion sécurisée au véhicule, en mettant en oeuvre la clé tertiaire ;
d2) si la procédure de connexion sécurisée réussit, l'application installée sur le second dispositif personnel transmet les données d'accès cryptées au véhicule;
d3) le véhicule utilise la clé secondaire pour décrypter les données d'accès cryptées ;
d4) après décryptage, le véhicule reconnait les données d'accès et commande le dispositif d'entrée sans clé, de sorte que l'utilisateur secondaire peut accéder au véhicule grâce à l'application installée sur le second dispositif personnel.

Ainsi, l'invention permet les échanges de données relatives au véhicule de manière pratique, efficace et sécurisée. Les opérations de cryptage et de transfert de données numériques sont réalisées via une application dédiée, exécutée sur un dispositif électronique personnel, tel qu'un téléphone mobile. L'invention permet d'automatiser ces opérations, sans que les utilisateurs n'aient à se soucier de leur complexité. L'interface utilisateur affichée sur le dispositif électronique personnel est simple et intuitive.

D'autres caractéristiques avantageuses de l'invention, prises isolément ou en combinaison, apparaitront à la lecture de la description ci-après.

Selon des caractéristiques préférées, quel que soit le mode de réalisation :
- Dans l'étape b1), les informations d'identification de l'utilisateur principal incluent une adresse courriel, un nom et/ou un numéro de téléphone.
- La clé maître définie pour le véhicule est attribuée à l'utilisateur principal et est modifiée lorsque le véhicule est associé à un nouvel utilisateur principal.
- La courbe elliptique de cryptage est une courbe elliptique de Diffie-Hellman.

Selon différentes caractéristiques envisageables, dans le mode de réalisation où l'utilisateur secondaire a accès au véhicule :
- L'étape b7) est réalisée manuellement par l'utilisateur principal sur l'application installée sur le premier dispositif personnel.
- Dans l'étape b7), l'utilisateur principal définit des conditions d'accès au véhicule, par exemple une période de temps établie, et en ce que dans l'étape b8), les données d'accès incluent, d'une part, la clé maître cryptée en utilisant la clé primaire pour le cryptage et, d'autre part, les conditions d'accès prédéfinies.
- Dans l'étape b6), les informations d'identification de l'utilisateur secondaire incluent une adresse courriel, un nom et/ou un numéro de téléphone.
- L'application installée sur le second dispositif personnel est configurée pour se connecter au serveur, sous certaines conditions.

De préférence, le premier dispositif électronique personnel est un téléphone mobile. En alternative, le premier dispositif électronique personnel est une montre électronique, une tablette numérique ou une carte d'entrée passive.

De même, de préférence, le second dispositif électronique personnel est un téléphone mobile. En alternative, le second dispositif électronique personnel est une montre électronique, une tablette numérique ou une carte d'entrée passive.

L'invention a également pour objet un système d'accès à un véhicule, comprenant:
- le véhicule qui est pilotable par différents utilisateurs, incluant un utilisateur principal et un utilisateur secondaire, qui est équipé d'un dispositif d'entrée sans clé, et qui stocke une clé maître, une clé primaire, une clé secondaire et une clé tertiaire ;
- un serveur de données distant, qui stocke des données serveur incluant des informations d'identification de l'utilisateur principal, une courbe elliptique de cryptage, la clé maître, la clé primaire, la clé secondaire et la clé tertiaire ; et
- un premier dispositif personnel qui appartient à l'utilisateur principal, qui comprend une application configurée pour se connecter au dispositif d'entrée sans clé et au serveur, et qui stocke la courbe elliptique de cryptage et les informations d'identification de l'utilisateur principal ;
dans lequel le véhicule, le serveur et le premier dispositif personnel sont configurés pour mettre en oeuvre la méthode d'accès définie ci-dessus, permettant à l'utilisateur principal d'accéder au véhicule.

Selon un mode de réalisation particulier, le système d'accès comprend un second dispositif personnel qui appartient à l'utilisateur secondaire, qui comprend une application configurée pour se connecter au dispositif d'entrée sans clé, et qui stocke des informations d'identification de l'utilisateur secondaire et la courbe elliptique de cryptage. Le véhicule, le serveur, le premier dispositif personnel et le second dispositif personnel sont configurés pour mettre en oeuvre la méthode d'accès définie ci-dessus, permettant à l'utilisateur secondaire d'accéder au véhicule.

L'invention a également pour objet une application informatique, configurée pour être installée puis exécutée sur un dispositif électronique personnel, l'application comprenant des portions de code pour mettre en oeuvre les étapes de la méthode d'accès définie ci-dessus, lorsque l'application est exécutée sur le dispositif électronique personnel.

L'invention sera mieux comprise à la lecture de la description qui va suivre, donnée uniquement à titre d'exemple non limitatif et faite en référence aux dessins annexés sur lesquels :
- la figure 1 est une représentation schématique d'un système d'échanges de données conforme à l'invention ;
- la figure 2 est une représentation schématique analogue à la figure 1, illustrant un premier mode de réalisation de la méthode d'échange de données conforme à l'invention, permettant à un utilisateur principal d'accéder au véhicule ; et
- la figure 3 est une représentation schématique analogue à la figure 1, illustrant un second mode de réalisation de la méthode d'échange de données conforme à l'invention, permettant à un utilisateur secondaire d'accéder au véhicule.

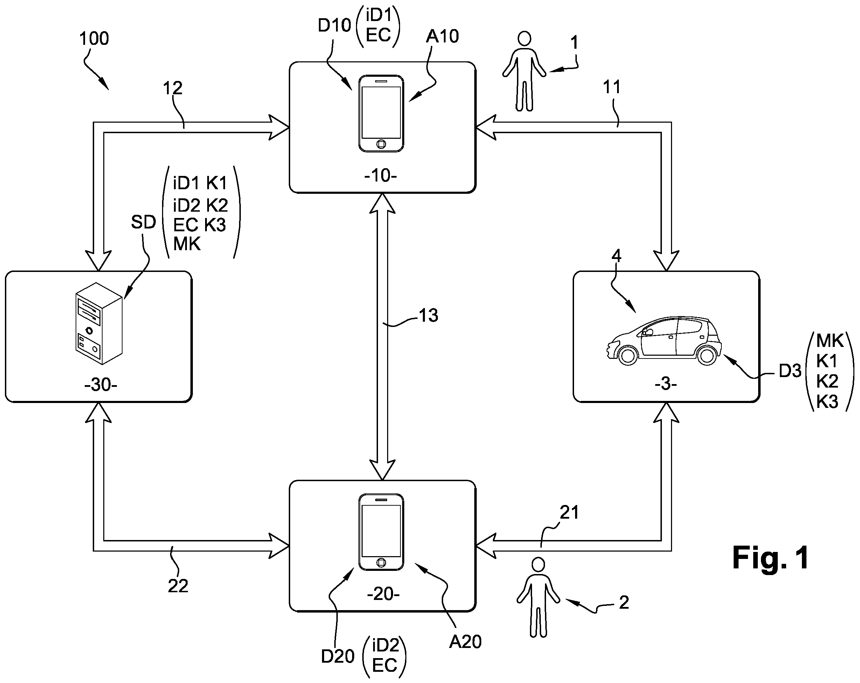

Sur la figure 1, le système 100 d'échanges de données comprend un véhicule automobile 3, un premier téléphone mobile 10, un second téléphone mobile 20, et un serveur de données distant 30.

Le véhicule 3 est conçu pour être piloté par un utilisateur, qui est alors le conducteur. Le véhicule 3 est pilotable en alternance par différents utilisateurs, incluant un utilisateur principal 1 et un utilisateur secondaire 2.

Généralement, l'utilisateur principal 1 est le propriétaire du véhicule 3, tandis que l'utilisateur secondaire 2 est un collègue, un ami ou un membre de la famille de l'utilisateur principal 1. Le téléphone 10 appartient à l'utilisateur 1, tandis que le téléphone 20 appartient à l'utilisateur 2.

Le véhicule 3 est équipé d'un dispositif d'entrée sans clé 4 (« *keyless entry system* » en anglais). Le dispositif 4 permet l'ouverture et la fermeture automatique des ouvrants du véhicule 3 par l'utilisateur 1 ou 2, sans disposer d'une clé introduite dans une serrure. Les ouvrants comprennent les portes et le coffre du véhicule 3.

La présente invention met en oeuvre différentes données numériques, listées dans le Tableau 1 ci-après :

**Tableau 1 : Données mises en oeuvre par l'invention**

| Référence | Explication |
|---|---|
| D3 | Données stockées dans le véhicule 3 |
| D10 | Données stockées dans le téléphone 10 |
| D20 | Données stockées dans le téléphone 20 |
| SD | Données stockées dans le serveur 30 |
| EC | Courbe elliptique de cryptage (de préférence courbe elliptique de Diffie-Hellman) |
| ID1 | Informations d'identification de l'utilisateur principal 1 (adresse courriel, nom et/ou numéro de téléphone de l'utilisateur principal 1) |
| ID2 | Informations d'identification de l'utilisateur secondaire 2 (adresse courriel, nom et/ou numéro de téléphone de l'utilisateur secondaire 2) |
| K1 | Clé primaire (clé de cryptage) |
| K2 | Clé secondaire (clé de cryptage) |
| K3 | Clé tertiaire (clé d'identification permettant au téléphone 10 ou 20 d'établir une liaison avec le véhicule 3) |
| MK | Clé maître (clé d'identification autorisant l'accès au véhicule 3) |

Egalement, la présente invention met en oeuvre différentes communications sans fil, listées dans le Tableau 2 ci-après :

**Tableau 2 : Communications sans fil mises en oeuvre par l'invention**

| Référence | Explication |
|---|---|
| 11 | Communication entre le téléphone 10 et le véhicule 3 |
| 12 | Communication entre le téléphone 10 et le serveur 30 |
| 13 | Communication entre les téléphones 10 et 20 |
| 21 | Communication entre le téléphone 20 et le véhicule 3 |
| 22 | Communication entre le téléphone 20 et le serveur 30 |

Les communications 11 et 21 utilisent de préférence un standard NFC (« *Near Field Communication* » en anglais) et/ou un standard Bluetooth.

Les communications sans fil 12 et 22 utilisent de préférence un standard Wifi, LTE, ou tout autre standard mobile avancé.

La communication 13 utilise un standard GSM, LTE, ou tout autre standard mobile. La communication 13 peut être établie directement entre les téléphones 10 et 20, ou bien transiter par le nuage en ligne (« cloud » en anglais).

Différentes données numériques D3 sont stockées de manière sécurisée dans le véhicule 3, par exemple dans l'unité centrale du véhicule 3 et/ou dans le dispositif 4. Les données D3 incluent la clé maître MK, la clé primaire K1, la clé secondaire K2 et la clé tertiaire K3.

Les téléphones 10 et 20 sont des téléphones intelligents (« *smartphone* » en anglais), configurés pour communiquer selon différents standards de communication sans fil (notamment LTE, NFC, Bluetooth, Wifi, etc...) et pour exécuter différentes applications. Chacun des téléphones 10 et 20 constitue un dispositif électronique personnel (« *personal electronic device* » en anglais), porté par son utilisateur 1 ou 2 respectif.

Dans le cadre de l'invention, les téléphones 10 et 20 peuvent se connecter au dispositif d'entrée sans clé 4 du véhicule 3 via une application dédiée, sous certaines conditions détaillées ci-après. L'application est référencée A10 sur le téléphone 10 et A20 sur le téléphone 20, étant entendu qu'il s'agit de la même application informatique.

La clé K3 est une première clé d'identification associée au véhicule 3, plus précisément au dispositif 4. Une fois reçue de manière cryptée par le téléphone 10 depuis le serveur 30, la clé K3 autorise une connexion du téléphone 10 au dispositif 4 via la communication sans fil 11. De même, une fois reçue de manière cryptée par le téléphone 20, la clé K3 autorise une connexion du téléphone 20 au dispositif 4 via la communication sans fil 21.

La clé maître MK est une seconde clé d'identification associée au véhicule 3, plus précisément au dispositif 4. La clé maître MK est attribuée à l'utilisateur principal 1, par exemple lors de l'achat ou la location du véhicule 3. La clé MK est modifiée lorsque le véhicule 3 est attribué à un nouvel utilisateur principal, par exemple lors de la vente du véhicule 3 à un nouveau propriétaire ou la location à un nouveau loueur.

Une fois la clé MK reçue de manière cryptée par le téléphone 10 depuis le serveur 30, et si la communication 11 a été établie grâce à la clé K3, alors la clé MK autorise l'accès du téléphone 10 au dispositif 4 via la communication sans fil 11. De même, une fois la clé MK reçue de manière cryptée par le téléphone 20 depuis le téléphone 10, et si la communication 21 a été établie grâce à la clé K3, alors la clé MK autorise l'accès du téléphone 20 au dispositif 4 via la communication sans fil 21. Ainsi, l'utilisateur 1 ou 2 peut commander au dispositif 4 l'ouverture et la fermeture des ouvrants du véhicule 3.

Initialement, les clés K3 et MK sont enregistrées de manière sécurisée dans le véhicule 3 et dans le serveur 30.

Après installation de l'application A10 sur le téléphone 10 :
- le téléphone 10 peut établir la communication sans fil 12 avec le serveur 30 ;
- les informations ID1 d'identification de l'utilisateur principal 1 sont stockées dans le serveur 30 ;
- la courbe elliptique de cryptage EC est téléchargée sur le téléphone 10 depuis le serveur 30 ;
- les données D10 stockées de manière sécurisée sur le téléphone 10 incluent alors les informations ID1 d'identification de l'utilisateur principal 1 et la courbe elliptique de cryptage EC ;
- sans les clés K3 et MK, le téléphone 10 ne peut pas encore accéder au véhicule 3 via la communication sans fil 11.

De même, après installation de l'application A20 sur le téléphone 20 :
- le téléphone 20 peut établir la communication sans fil 22 avec le serveur 30 ;
- les informations ID2 d'identification de l'utilisateur secondaire 2 sont stockées dans le serveur 30 ;
- la courbe elliptique de cryptage EC est téléchargée sur le téléphone 20 depuis le serveur 30 ;
- les données D20 stockées de manière sécurisée sur le téléphone 20 incluent les informations ID2 d'identification de l'utilisateur secondaire 2 et la courbe elliptique de cryptage EC ;
- sans les clés K3 et MK, le téléphone 20 ne peut pas encore accéder au véhicule 3 via la communication sans fil 21.

Le serveur 30 est dédié au stockage sécurisé de données serveur SD relatives, d'une part, au véhicule 3 et, d'autre part, aux téléphones 10 et 20 configurés pour se connecter au véhicule 3. Les données SD incluent la courbe elliptique de cryptage EC, la clé maître MK, la clé primaire K1, la clé secondaire K2 et la clé tertiaire K3. Après installation des applications A10 et A20 sur les téléphones 10 et 20, les données SD incluent également les informations ID1 et ID2.

En pratique, le système 100 peut être conformé différemment de la figure 1 sans sortir du cadre de l'invention.

En variante, le téléphone 10 et/ou 20 peut être remplacé par une montre électronique, une tablette numérique, ou une carte d'entrée passive (« *passive entry card* »), constituant alors le dispositif électronique personnel présentant les caractéristiques détaillées ci-dessus pour le téléphone 10. D'autres dispositifs électroniques personnels peuvent être mis en oeuvre sans sortir du cadre de l'invention.

Selon une autre variante, le système 100 peut comprendre plus de deux dispositifs électroniques personnels 10 et 20 associés au dispositif 4 équipant le véhicule 3.

Selon une autre variante, le système 100 peut comprendre plusieurs véhicules 3 équipés de dispositifs d'entrée sans clé 4 associés au même téléphone 10.

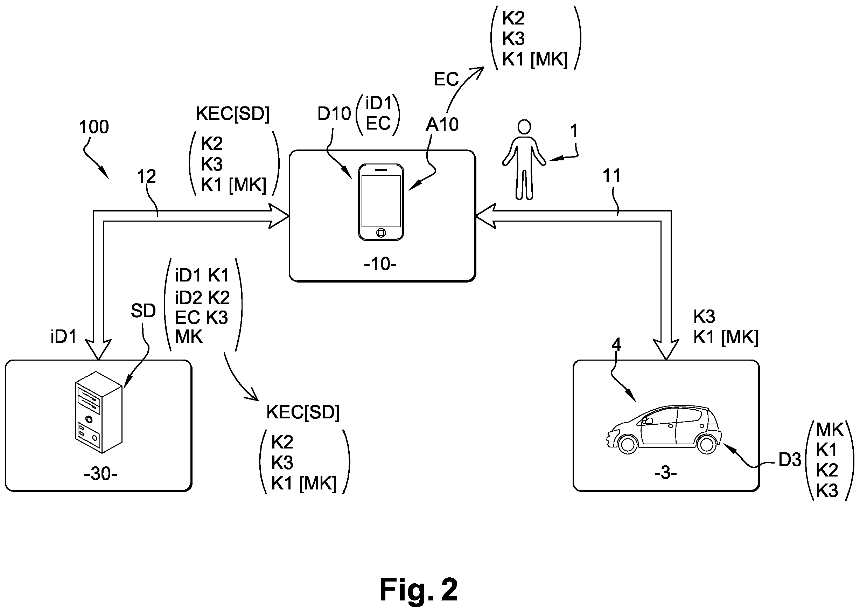

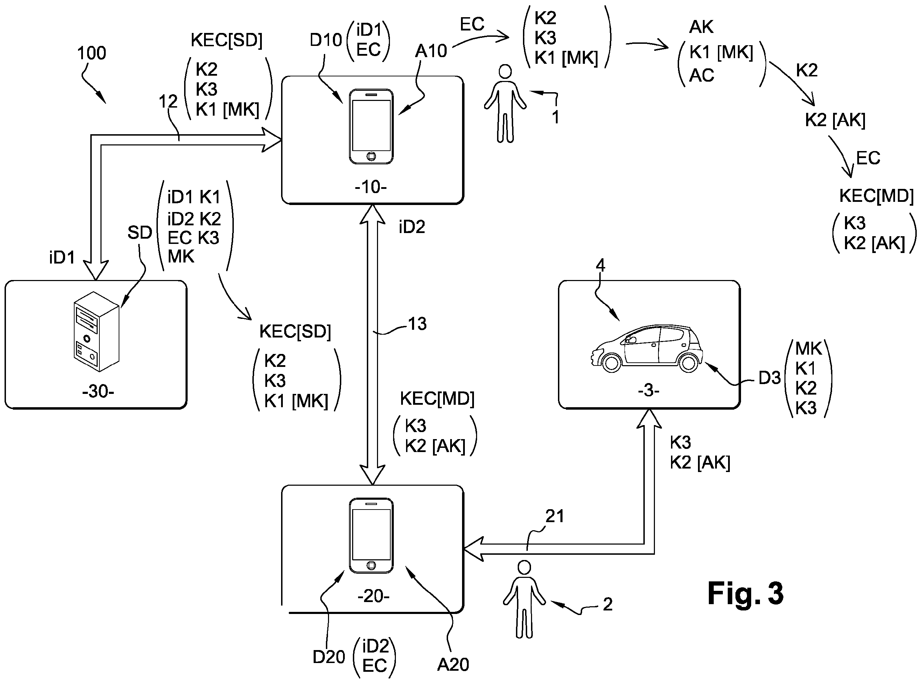

La méthode d'accès conforme à l'invention est détaillée ci-après en référence aux figures 2 et 3.

La figure 2 illustre le premier mode de réalisation, consistant à donner accès au véhicule 3 à l'utilisateur principal 1, tandis que la figure 3 illustre le second mode de réalisation, consistant à donner accès au véhicule 3 à l'utilisateur principal 1.

Quel que soit le mode de réalisation, la méthode d'accès comprend une phase préliminaire, une phase d'échanges de données et une phase d'accès.

La phase préliminaire comprend des étapes a1), a2) et a3), consistant à fournir le véhicule 3, le serveur 30 et le téléphone 10.

Dans le second mode de réalisation, la phase préliminaire comprend de plus une étape a4), consistant à fournir le téléphone 20.

A ce stade, les applications A10 et A20 sont installées sur les téléphones 10 et 20.

La phase d'échange de données comprend des étapes successives b1), b2), b3), b4) et b5).

Dans l'étape b1), l'application A10 envoie une requête au serveur 30, accompagnée des informations ID1.

Dans l'étape b2), le serveur 30 reconnait les informations ID1 et autorise l'exécution de la requête.

Dans l'étape b3), le serveur 30 crypte la clé maître MK en utilisant la clé primaire K1 pour le cryptage. Le serveur 30 génère ensuite des données serveur cryptées KEC[SD] en utilisant la courbe elliptique EC pour le cryptage. Les données serveur cryptées KEC[SD] incluent la clé secondaire K2, la clé tertiaire K3, et la clé maître cryptée K1[MK].

Dans l'étape b4), le serveur 30 envoie les données serveur cryptées KEC[SD] au téléphone 10.

Dans l'étape b5), l'application A10 installée sur le téléphone 10 utilise la courbe elliptique EC pour décrypter les données serveur cryptées KEC[SD]. A ce stade, les données D10 stockées sur le téléphone 10 incluent la clé secondaire K2, la clé tertiaire K3, et la clé maître cryptée K1[MK]. Cependant, les données D10 n'incluant pas la clé K1, de sorte que l'application A20 ne peut pas décrypter la clé maître cryptée K1[MK].

Dans le premier mode de réalisation, l'étape b5) est suivie par la phase d'accès de l'utilisateur 1 au véhicule 3. La phase d'accès comprend alors des étapes successives c1), c2), c3) et c4).

Dans l'étape c1), l'application A10 exécute une procédure de connexion sécurisée au véhicule 3 via la communication 11, en mettant en oeuvre la clé tertiaire K3. De préférence, la communication 11 est établie automatiquement lorsque le téléphone 10 est situé à une distance prédéterminée du dispositif 4 et dispose de paramètres d'initialisation reçus du serveur 30, incluant la clé K3.

Dans l'étape c2), si la procédure de connexion sécurisée réussit, l'application A10 transmet la clé maître cryptée K1[MK] au véhicule 3.

Dans l'étape c3), le véhicule 3 utilise la clé primaire K1 pour décrypter la clé maître cryptée K1[MK].

Dans l'étape c4), après décryptage, le véhicule 3 reconnait la clé maître MK et commande le dispositif d'entrée sans clé 4, de sorte que l'utilisateur principal 1 peut accéder au véhicule grâce à l'application A10.

Ainsi, l'invention permet à l'utilisateur 1 d'accéder de manière sécurisée au véhicule 3.

Dans le second mode de réalisation, après l'étape b5), la phase d'échange de données comprend de plus des étapes successives b6), b7), b8), b9), b10), b11) et b12).

Dans l'étape b6), l'application A20 envoie une requête à l'application A10, accompagnée des informations ID2.

Dans l'étape b7), l'utilisateur principal 1 accepte de prêter le véhicule 3 à l'utilisateur secondaire 2. De préférence, cette étape b7) est réalisée manuellement par l'utilisateur 1 sur l'application A10. Par exemple, la requête envoyée par l'application s'affiche sur l'application A10, et l'utilisateur 1 appuie sur « accepter » ou « refuser ». Si l'utilisateur 1 n'accepte pas de prêter le véhicule 3 à l'utilisateur 2, alors la phase d'échange de données est interrompue. Avantageusement dans l'étape b7), l'utilisateur principal 1 peut définir des conditions d'accès AC au véhicule 3, par exemple une période de temps durant laquelle l'utilisateur 2 peut avoir accès au véhicule 3.

Dans l'étape b8), l'application A10 génère des données d'accès AK, incluant la clé maître cryptée K1[MK]. Si l'utilisateur 1 a défini des conditions d'accès AC dans l'étape b7), alors les données d'accès AK incluent la clé maître cryptée K1[MK] et les conditions d'accès AC prédéfinies.

Dans l'étape b9), l'application A10 génère des données d'accès cryptées K2[AK] en utilisant la clé secondaire K2 pour le cryptage.

Dans l'étape b10), l'application A10 génère des données mobiles cryptées KEC[MD] en utilisant la courbe elliptique EC pour le cryptage. Les données mobiles cryptées KEC[MD] incluent la clé tertiaire K3 et les données d'accès cryptées K2[AK].

Dans l'étape b11), l'application A10 transmet les données mobiles cryptées KEC[MD] à l'application A20.

Dans l'étape b12), l'application A20 utilise la courbe elliptique EC pour décrypter les données mobiles cryptées KEC[MD]. A ce stade, les données D20 stockées sur le téléphone 20 incluent la clé tertiaire K3 et les données d'accès cryptées K2[AK]. Cependant, les données D20 n'incluant pas la clé K2, de sorte que l'application A20 ne peut pas décrypter les données d'accès cryptées K2[AK].

Dans le second mode de réalisation, l'étape b12) est suivie par la phase d'accès de l'utilisateur 2 au véhicule 3. La phase d'accès comprend alors des étapes successives d1), d2), d3) et d4).

Dans l'étape d1), l'application A20 exécute une procédure de connexion sécurisée au véhicule 3 via la communication 21, en mettant en oeuvre la clé tertiaire K3. De préférence, la communication 21 est établie automatiquement lorsque le téléphone 20 est situé à une distance prédéterminée du dispositif 4 et dispose de paramètres d'initialisation reçus du téléphone 10, incluant la clé K3.

Dans l'étape d2), si la procédure de connexion sécurisée réussit, l'application A20 transmet les données d'accès cryptées K2[AK] au véhicule 3.

Dans l'étape d3), le véhicule 3 utilise la clé secondaire K2 pour décrypter les données d'accès cryptées K2[AK].

Dans l'étape d4), après décryptage, le véhicule 3 reconnait les données d'accès AK, incluant la clé maître cryptée K1[MK] et les conditions d'accès AC. Le véhicule 3 utilise la clé primaire K1 pour décrypter la clé maître cryptée K1[MK]. Le véhicule 3 commande alors le dispositif d'entrée sans clé 4, de sorte que l'utilisateur secondaire 2 peut accéder au véhicule grâce à l'application A20.

Ainsi, l'invention permet à l'utilisateur 1 d'autoriser de manière sécurisée l'utilisateur 2 à accéder au véhicule 3, puis à l'utilisateur 2 d'accéder de manière sécurisée au véhicule 3.

En pratique, les caractéristiques techniques des différentes variantes mentionnées ci-dessus peuvent être, en totalité ou pour certaines d'entre elles, combinées entre elles.

Ainsi, la méthode et le système 100 d'accès sécurisé au véhicule 3 peuvent être adaptés en termes de coûts, d'ergonomie, de fonctionnalités et de performances.

## Revendications

1. Méthode d'accès à un véhicule (3), comprenant une phase préliminaire incluant les étapes suivantes :
a1) fournir le véhicule (3), qui est pilotable par différents utilisateurs, incluant un utilisateur principal (1) et un utilisateur secondaire (2), qui est équipé d'un dispositif d'entrée sans clé (4), et qui stocke une clé maître (MK), une clé primaire (K1), une clé secondaire (K2) et une clé tertiaire (K3) ;
a2) fournir un serveur (30) de données distant, qui stocke des données serveur (SD) incluant des informations d'identification (ID1) de l'utilisateur principal (1), une courbe elliptique de cryptage (EC), la clé maître (MK), la clé primaire (K1), la clé secondaire (K2) et la clé tertiaire (K3) ;
a3) fournir un premier dispositif personnel (10) qui appartient à l'utilisateur principal (1), qui comprend une application (A10) configurée pour se connecter au dispositif d'entrée sans clé (4) et au serveur (30), et qui stocke les informations d'identification (ID1) de l'utilisateur principal (1) et la courbe elliptique de cryptage (EC) ;
la méthode d'accès comprenant ensuite une phase d'échange de données incluant les étapes successives suivantes :
b1) l'application (A10) installée sur le premier dispositif personnel (10) envoie les informations d'identification (ID1) de l'utilisateur principal (1) au serveur (30) ;
b2) le serveur (30) reconnaît les informations d'identification (ID1) de l'utilisateur principal (1) ;
b3) le serveur (30) génère des données serveur cryptées (KEC[SD]) en utilisant la courbe elliptique de cryptage (EC) pour le cryptage, les données serveur cryptées (KEC[SD]) incluant la clé secondaire (K2), la clé tertiaire (K3), et une clé maître cryptée (K1[MK]) en utilisant la clé primaire (K1) pour le cryptage ;
b4) le serveur (30) envoie les données serveur cryptées (KEC[SD]) au premier dispositif personnel (10) ;
b5) le premier dispositif personnel (10) utilise la courbe elliptique de cryptage (EC) pour décrypter les données serveur cryptées (KEC[SD]), de sorte que le premier dispositif personnel (10) stocke la clé secondaire (K2), la clé tertiaire (K3), et la clé maître cryptée (K1[MK]) ;
la méthode d'accès comprenant ensuite une phase d'accès incluant les étapes successives suivantes :
c1) l'application (A10) installée sur le premier dispositif personnel (10) exécute une procédure de connexion sécurisée au véhicule (3), en mettant en oeuvre la clé tertiaire (K3) ;
c2) si la procédure de connexion sécurisée réussit, l'application (A10) installée sur le premier dispositif personnel (10) transmet la clé maître cryptée (K1[MK]) au véhicule (3);
c3) le véhicule (3) utilise la clé primaire (K1) pour décrypter la clé maître cryptée (K1[MK]) ;
c4) après décryptage, le véhicule (3) reconnaît la clé maître (MK) et commande le dispositif d'entrée sans clé (4), de sorte que l'utilisateur principal (1) peut accéder au véhicule grâce à l'application (A10) installée sur le premier dispositif personnel (10).

2. Méthode d'accès à un véhicule (3), comprenant une phase préliminaire incluant les étapes suivantes :
a1) fournir le véhicule (3), qui est pilotable par différents utilisateurs, incluant un utilisateur principal (1) et un utilisateur secondaire (2), qui est équipé d'un dispositif d'entrée sans clé (4), et qui stocke une clé maître (MK), une clé primaire (K1), une clé secondaire (K2) et une clé tertiaire (K3) ;
a2) fournir un serveur (30) de données distant, qui stocke des données serveur (SD) incluant des informations d'identification (ID1) de l'utilisateur principal (1), une courbe elliptique de cryptage (EC), la clé maître (MK), la clé primaire (K1), la clé secondaire (K2) et la clé tertiaire (K3) ;
a3) fournir un premier dispositif personnel (10) qui appartient à l'utilisateur principal (1), qui comprend une application (A10) configurée pour se connecter au dispositif d'entrée sans clé (4) et au serveur (30), et qui stocke les informations d'identification (ID1) de l'utilisateur principal (1) et la courbe elliptique de cryptage (EC) ;
a4) fournir un second dispositif personnel (20) qui appartient à l'utilisateur secondaire (2), qui comprend une application (A20) configurée pour se connecter au dispositif d'entrée sans clé (4), et qui stocke des informations d'identification (ID2) de l'utilisateur secondaire (2) et la courbe elliptique de cryptage (EC) ;
la méthode d'accès comprenant ensuite une phase d'échange de données incluant les étapes successives suivantes :
b1) l'application (A10) installée sur le premier dispositif personnel (10) envoie les informations d'identification (ID1) de l'utilisateur principal (1) au serveur (30) ;
b2) le serveur (30) reconnaît les informations d'identification (ID1) de l'utilisateur principal (1) ;
b3) le serveur (30) génère des données serveur cryptées (KEC[SD]) en utilisant la courbe elliptique de cryptage (EC) pour le cryptage, les données serveur cryptées (KEC[SD]) incluant la clé secondaire (K2), la clé tertiaire (K3), et une clé maître cryptée (K1[MK]) en utilisant la clé primaire (K1) pour le cryptage ;
b4) le serveur (30) envoie les données serveur cryptées (KEC[SD]) au premier dispositif personnel (10) ;
b5) le premier dispositif personnel (10) utilise la courbe elliptique de cryptage (EC) pour décrypter les données serveur cryptées (KEC[SD]), de sorte que le premier dispositif personnel (10) stocke la clé secondaire (K2), la clé tertiaire (K3), et la clé maître cryptée (K1[MK]) ;
b6) l'application (A20) installée sur le second dispositif personnel (20) envoie les informations d'identification (ID2) de l'utilisateur secondaire (2) à l'application (A10) installée sur le premier dispositif personnel (10) ;
b7) l'utilisateur principal (1) accepte de prêter le véhicule (3) à l'utilisateur secondaire (2) ;
b8) l'application (A10) installée sur le premier dispositif personnel (10) génère des données d'accès (AK), incluant la clé maître cryptée (K1[MK]) ;
b9) l'application (A10) installée sur le premier dispositif personnel (10) génère des données d'accès cryptées (K2[AK]) en utilisant la clé secondaire (K2) pour le cryptage ;
b10) l'application (A10) installée sur le premier dispositif personnel (10) génère des données mobiles cryptées (KEC[MD]) en utilisant la courbe elliptique de cryptage (EC) pour le cryptage, les données mobiles cryptées (KEC[MD]) incluant la clé tertiaire (K3), et les données d'accès cryptées (K2[AK]) ;
b11) l'application (A10) installée sur le premier dispositif personnel (10) transmet les données mobiles cryptées (KEC[MD]) à l'application (A20) installée sur le second dispositif personnel (20) ;
b12) l'application (A20) installée sur le second dispositif personnel (20) utilise la courbe elliptique de cryptage (EC) pour décrypter les données mobiles cryptées (KEC[MD]), de sorte que le second dispositif personnel (20) stocke la clé tertiaire (K3) et les données d'accès cryptées (K2[AK]) ;
la méthode d'accès comprenant ensuite une phase d'accès incluant les étapes successives suivantes :
d1) l'application (A20) installée sur le second dispositif personnel (20) exécute une procédure de connexion sécurisée au véhicule (3), en mettant en oeuvre la clé tertiaire (K3) ;
d2) si la procédure de connexion sécurisée réussit, l'application (A20) installée sur le second dispositif personnel (20) transmet les données d'accès cryptées (K2[AK]) au véhicule (3);
d3) le véhicule (3) utilise la clé secondaire (K2) pour décrypter les données d'accès cryptées (K2[AK]) ;
d4) après décryptage, le véhicule (3) reconnait les données d'accès (AK) et commande le dispositif d'entrée sans clé (4), de sorte que l'utilisateur secondaire (2) peut accéder au véhicule grâce à l'application (A20) installée sur le second dispositif personnel (20).

3. Méthode d'accès selon la revendication 2, **caractérisée en ce que** l'étape b7) est réalisée manuellement par l'utilisateur principal (1) sur l'application (A10) installée sur le premier dispositif personnel (10).

4. Méthode d'accès selon l'une des revendications 2 ou 3, **caractérisée en ce que** dans l'étape b7), l'utilisateur principal (1) définit des conditions d'accès (AC) au véhicule (3), par exemple une période de temps établie, et **en ce que** dans l'étape b8), les données d'accès (AK) incluent, d'une part, la clé maître cryptée (K1[MK]) en utilisant la clé primaire (K1) pour le cryptage et, d'autre part, les conditions d'accès (AC) prédéfinies.

5. Méthode d'accès selon l'une des revendications 2 à 4, **caractérisée en ce que** dans l'étape b6), les informations d'identification (ID2) de l'utilisateur secondaire (2) incluent une adresse courriel, un nom et/ou un numéro de téléphone.

6. Méthode d'accès selon l'une des revendications 2 à 5, **caractérisée en ce que** l'application (A20) installée sur le second dispositif personnel (20) est configurée pour se connecter au serveur (30), sous certaines conditions.

7. Méthode d'accès selon l'une des revendications 2 à 6, **caractérisée en ce que** le second dispositif personnel (20) est un téléphone mobile.

8. Méthode d'accès selon l'une des revendications 2 à 6, **caractérisée en ce que** le second dispositif personnel (20) est une montre électronique, une tablette numérique ou une carte d'entrée passive.

9. Méthode d'accès selon l'une des revendications 1 à 8, **caractérisée en ce que** le premier dispositif personnel (10) est un téléphone mobile.

10. Méthode d'accès selon l'une des revendications 1 à 8, **caractérisée en ce que** le premier dispositif personnel (10) est une montre électronique, une tablette numérique ou une carte d'entrée passive.

11. Méthode d'accès selon l'une des revendications 1 à 10, **caractérisée en ce que** dans l'étape b1), les informations d'identification (ID1) de l'utilisateur principal (1) incluent une adresse courriel, un nom et/ou un numéro de téléphone.

12. Méthode d'accès selon l'une des revendications 1 à 11, **caractérisée en ce que** la clé maître (MK) définie pour le véhicule (3) est attribuée à l'utilisateur principal (1) et est modifiée lorsque le véhicule (3) est associé à un nouvel utilisateur principal.

13. Méthode d'accès selon l'une des revendications 1 à 12, **caractérisée en ce que** la courbe elliptique de cryptage (EC) est une courbe elliptique de Diffie-Hellman.

14. Système d'accès (100) à un véhicule (3), comprenant :
- le véhicule (3) qui est pilotable par différents utilisateurs, incluant un utilisateur principal (1) et un utilisateur secondaire (2), qui est équipé d'un dispositif d'entrée sans clé (4), et qui stocke une clé maître (MK), une clé primaire (K1), une clé secondaire (K2) et une clé tertiaire (K3) ;
- un serveur (30) de données distant, qui stocke des données serveur (SD) incluant des informations d'identification (ID1) de l'utilisateur principal (1), une courbe elliptique de cryptage (EC), la clé maître (MK), la clé primaire (K1), la clé secondaire (K2) et la clé tertiaire (K3) ; et
- un premier dispositif personnel (10) qui appartient à l'utilisateur principal (1), qui comprend une application (A10) configurée pour se connecter au dispositif d'entrée sans clé (4) et au serveur (30), et qui stocke la courbe elliptique de cryptage (EC) et les informations d'identification (ID1) de l'utilisateur principal (1) ;
dans lequel le véhicule (3), le serveur (30) et le premier dispositif personnel (10) sont configurés pour mettre en oeuvre la méthode d'accès selon la revendication 1.

15. Système d'accès (100) selon la revendication 14, **caractérisé en ce que** le système d'accès (100) comprend un second dispositif personnel (20) qui appartient à l'utilisateur secondaire (2), qui comprend une application (A20) configurée pour se connecter au dispositif d'entrée sans clé (4), et qui stocke des informations d'identification (ID2) de l'utilisateur secondaire (2) et la courbe elliptique de cryptage (EC) ; et **en ce que** le véhicule (3), le serveur (30), le premier dispositif personnel (10) et le second dispositif personnel (20) sont configurés pour mettre en oeuvre la méthode d'accès selon la revendication 2.

16. Application (A10 ; A20) informatique, configurée pour être installée puis exécutée sur un dispositif électronique personnel (10 ; 20), l'application (A10 ; A20) comprenant des portions de code pour mettre en oeuvre les étapes de la méthode d'accès selon l'une des revendications 1 à 14, lorsque l'application (A10 ; A20) est exécutée sur le dispositif électronique personnel (10 ; 20).

## Patentansprüche

1. Verfahren des Zugangs zu einem Fahrzeug (3), das eine vorbereitende Phase umfasst, die aus den folgenden Schritten besteht:
a1) Bereitstellung des Fahrzeugs (3), das von verschiedenen Benutzern gefahren werden kann, einschließlich eines Hauptnutzers (1) und eines Sekundärnutzers (2), das mit einem schlüssellosen Zugangsgerät (4) ausgerüstet ist und bei dem ein Hauptschlüssel (MK), ein Primärschlüssel (K1), ein Sekundärschlüssel (K2) sowie ein Tertiärschlüssel (K3) gespeichert sind;
a2) Bereitstellung eines Daten-Fernservers (30), der die Serverdaten (SD) speichert, wobei diese die Informationen zur Identifikation (ID1) des Hauptnutzers (1), eine elliptische Verschlüsselungskurve (EC), den Hauptschlüssel (MK), den Primärschlüssel (K1), den Sekundärschlüssel (K2) und den Tertiärschlüssel (K3) umfassen;
a3) Bereitstellung eines ersten persönlichen Geräts (10), das dem Hauptnutzer (1) gehört und eine App (A10) umfasst, die konfiguriert ist, um sich mit dem schlüssellosen Zugangsgerät (4) und dem Server (30) zu verbinden und das die Identifikationsinformationen (ID1) des Hauptnutzers (1) und die elliptische Verschlüsselungskurve (EC) speichert;
wobei das Zugangsverfahren dann eine Phase des Datenaustauschs umfasst, die aus den folgenden aufeinanderfolgenden Schritten besteht:
b1) die App (A10), die auf dem ersten persönlichen Gerät (10) installiert ist, sendet die Identifikationsinformationen (ID1) des Hauptnutzers (1) an den Server (30);
b2) der Server (30) erkennt die Identifikationsinformationen (ID1) des Hauptnutzers (1);
b3) der Server (30) erzeugt verschlüsselte Serverdaten (KEC[SD]) unter Verwendung der elliptischen Verschlüsselungskurve (EC) für die Verschlüsselung,
wobei die verschlüsselten Serverdaten (KEC[SD]) dabei unter Verwendung des Hauptschlüssels (K1) für die Verschlüsselung den Sekundärschlüssel (K2), den Tertiärschlüssel (K3) und einen verschlüsselten Hauptschlüssel (K1[MK]) enthalten,
b4) der Server (30) sendet die verschlüsselten Serverdaten (KEC[SD]) an das erste persönliche Gerät (10);
b5) das erste persönliche Gerät (10) verwendet die elliptische Verschlüsselungskurve (EC) zur Entschlüsselung der verschlüsselten Serverdaten (KEC[SD]), so dass das erste persönliche Gerät (10) den Sekundärschlüssel (K2), den Tertiärschlüssel (K3) und den verschlüsselten Hauptschlüssel (K1[MK]) speichert;
wobei das Zugangsverfahren dann eine Zugangsphase umfasst, die aus den folgenden aufeinanderfolgenden Schritten besteht:
c1) die App (A10), die auf dem ersten persönlichen Gerät (10) installiert ist, führt unter Einsatz des Tertiärschlüssels (K3) einen gesicherten Verbindungsaufbau mit dem Fahrzeug (3) durch;
c2) wenn der gesicherten Verbindungsaufbau gelingt, sendet die App (A10), die auf dem ersten persönlichen Gerät (10) installiert ist, den verschlüsselten Hauptschlüssel (K1[MK]) an das Fahrzeug (3);
c3) das Fahrzeug (3) verwendet den Primärschlüssel (K1) zur Entschlüsselung des Hauptschlüssels (K1[MK]);
c4) nach Entschlüsselung erkennt das Fahrzeug (3) den Hauptschlüssel (MK) und steuert das schlüssellose Zugangsgerät (4), so dass der Hauptnutzer (1) dank der App (A10), die auf dem ersten persönlichen Gerät (10) installiert ist, Zugang zum Fahrzeug hat.

2. Verfahren des Zugangs zu einem Fahrzeug (3), das eine vorbereitende Phase umfasst, die aus den folgenden Schritten besteht:
a1) Bereitstellung des Fahrzeugs (3), das von verschiedenen Benutzern gefahren werden kann, einschließlich eines Hauptnutzers (1) und eines Sekundärnutzers (2), das mit einer schlüssellosen Zugangsgerät (4) ausgerüstet ist und bei dem ein Hauptschlüssel (MK), ein Primärschlüssel (K1), ein Sekundärschlüssel (K2) sowie ein Tertiärschlüssel (K3) gespeichert sind;
a2) Bereitstellung eines Daten-Fernservers (30), der die Serverdaten (SD) speichert, die Informationen zur Identifikation (ID1) des Hauptnutzers (1), eine elliptische Verschlüsselungskurve (EC), den Hauptschlüssel (MK), den Primärschlüssel (K1), den Sekundärschlüssel (K2) und den Tertiärschlüssel (K3) umfassen;
a3) Bereitstellung eines ersten persönlichen Geräts (10), das dem Hauptnutzer (1) gehört und eine App (A10) umfasst, die konfiguriert ist, um sich mit dem schlüssellosen Zugangsgerät (4) und dem Server (30) zu verbinden und das die Identifikationsinformationen (ID1) des Hauptnutzers (1) und die elliptische Verschlüsselungskurve (EC) speichert;
a4) Bereitstellung einer zweiten persönlichen Gerät (20), das dem Sekundärnutzer (2) gehört und eine App (A20) umfasst, die konfiguriert ist, um sich mit dem schlüssellosen Zugangsgerät (4) zu verbinden und das die Identifikationsinformationen (ID2) des Sekundärnutzers (2) und die elliptische Verschlüsselungskurve (EC) speichert;
wobei das Zugangsverfahren dann eine Phase des Datenaustauschs umfasst, die aus den folgenden aufeinanderfolgenden Schritten besteht:
b1) die App (A10), die auf dem ersten persönlichen Gerät (10) installiert ist, sendet die Identifikationsinformationen (ID1) des Hauptnutzers (1) an den Server (30);
b2) der Server (30) erkennt die Identifikationsinformationen (ID1) des Hauptnutzers (1);
b3) der Server (30) erzeugt verschlüsselte Serverdaten (KEC[SD]) unter Verwendung der elliptischen Verschlüsselungskurve (EC) für die Verschlüsselung, wobei die verschlüsselten Serverdaten (KEC[SD]) dabei unter Verwendung des Hauptschlüssels (K1) für die Verschlüsselung den Sekundärschlüssel (K2), den Tertiärschlüssel (K3) und einen verschlüsselten Hauptschlüssel (K1[MK]) enthalten,
b4) der Server (30) sendet die verschlüsselten Serverdaten (KEC[SD]) an das erste persönliche Gerät (10);
b5) das erste persönliche Gerät (10) verwendet die elliptische Verschlüsselungskurve (EC) zur Entschlüsselung der verschlüsselten Serverdaten (KEC[SD]), so dass die erste persönliche Gerät (10) den Sekundärschlüssel (K2), den Tertiärschlüssel (K3) und den verschlüsselten Hauptschlüssel (K1[MK]) speichert;
b6) die App (A20), die auf dem zweiten persönlichen Gerät (20) installiert ist, sendet die Identifikationsinformationen (ID2) des Sekundärnutzers (2) an die auf dem ersten persönlichen Gerät (10) installierte App (A10);
b7) der Hauptnutzer (1) ist bereit, das Fahrzeug (3) dem Sekundärnutzer (2) zu leihen;
b8) die App (A10), die auf dem ersten persönlichen Gerät (10) installiert ist, erzeugt Zugangsdaten (AK), einschließlich des verschlüsselten Hauptschlüssels (K1[MK]);
b9) die App (A10), die auf dem ersten persönlichen Gerät (10) installiert ist, erzeugt verschlüsselte Zugangsdaten (K12MK]) unter Verwendung des Sekundärschlüssels (K2) für die Verschlüsselung;
b10) die App (A10), die auf dem ersten persönlichen Gerät (10) installiert ist, erzeugt verschlüsselte mobile Daten (KEC[MD]) unter Verwendung der elliptischen Verschlüsselungskurve (EC) für die Verschlüsselung, wobei die verschlüsselten mobilen Daten (KEC[MD]) dabei den Tertiärschlüssel (K3) und die verschlüsselten Zugangsdaten (K2[AK]) enthalten,
b11) die App (A10), die auf dem ersten persönlichen Gerät (10) installiert ist, sendet die verschlüsselten mobilen Daten (KEC[MD]) an die App (A20), die auf dem zweiten persönlichen Gerät (20) installiert ist;
b12) die App (A20), die auf dem zweiten persönlichen Gerät (20) installiert ist, verwendet die elliptische Verschlüsselungskurve (EC) zur Entschlüsselung der verschlüsselten mobilen Daten (KEC[SD]), so dass die zweite persönliche Gerät (20) den Tertiärschlüssel (K3) und die verschlüsselten Zugangsdaten (K2[AK]) speichert;
wobei das Zugangsverfahren dann eine Zugangsphase umfasst, die aus den folgenden aufeinanderfolgenden Schritten besteht:
d1) die App (A20), die auf dem zweiten persönlichen Gerät (20) installiert ist, führt einen gesicherten Verbindungsaufbau mit dem Fahrzeug (3) unter Einsatz des Tertiärschlüssels (K3)durch,
d2) wenn der gesicherten Verbindungsaufbau gelingt, sendet die App (A20), die auf dem zweiten persönlichen Gerät (20) installiert ist, die verschlüsselten Zugangsdaten (K2[AK]) an das Fahrzeug (3);
d3) das Fahrzeug (3) verwendet den Sekundärschlüssel (K2) zur Entschlüsselung der Zugangsdaten (K2[AK]);
c4) nach Entschlüsselung erkennt das Fahrzeug (3) die Zugangsdaten (AK) und steuert das schlüssellose Zugangsgerät (4), so dass der Sekundärnutzer (2) dank der App (A20), die auf dem zweiten persönlichen Gerät (20) installiert ist, Zugang zum Fahrzeug hat.

3. Zugangsverfahren gemäß Anspruch 2, **dadurch gekennzeichnet, dass** Schritt b7) manuell vom Hauptnutzer (1) über die App (A10), die auf dem ersten persönlichen Gerät (10) installiert ist, durchgeführt wird.

4. Zugangsverfahren gemäß einem der Ansprüche 2 oder 3, **dadurch gekennzeichnet, dass** in Schritt b7) der Hauptnutzer (1) die Zugangsbedingungen (AC) zum Fahrzeug (3) zum Beispiel eine festgelegte Zeitspanne definiert und dadurch, dass in Schritt b8) die Zugangsdaten (AK) einerseits den verschlüsselten Hauptschlüssel (K1[MK]), indem der Primärschlüssel (K1) zur Verschlüsselung verwendet wird und andererseits die vorher definierten Zugangsdaten (AC) enthalten.

5. Zugangsverfahren gemäß einem der Ansprüche 2 bis 4, **dadurch gekennzeichnet, dass** in Schritt b6) die Identifikationsinformationen (ID2) des Sekundärnutzers (2) eine E-Mail-Adresse, einen Namen und/oder eine Telefonnummer enthalten.

6. Zugangsverfahren gemäß einem der Ansprüche 2 bis 5, **dadurch gekennzeichnet, dass** die App (A20), die auf dem zweiten persönlichen Gerät (20) installiert ist, konfiguriert ist, um sich unter bestimmten Bedingungen mit dem Server (30) zu verbinden.

7. Zugangsverfahren gemäß einem der Ansprüche 2 bis 6, **dadurch gekennzeichnet, dass** das zweite persönliche Gerät (20) ein Mobiltelefon ist.

8. Zugangsverfahren gemäß einem der Ansprüche 2 bis 6, **dadurch gekennzeichnet, dass** das zweite persönliche Gerät (20) eine elektronische Uhr, ein Tablet-PC oder eine passive Zugangskarte ist.

9. Zugangsverfahren gemäß einem der Ansprüche 1 bis 8, **dadurch gekennzeichnet, dass** das erste persönliche Gerät (10) ein Mobiltelefon ist.

10. Zugangsverfahren gemäß einem der Ansprüche 1 bis 8, **dadurch gekennzeichnet, dass** das erste persönliche Gerät (10) eine elektronische Uhr, ein Tablet-PC oder eine passive Zugangskarte ist.

11. Zugangsverfahren gemäß einem der Ansprüche 1 bis 10, **dadurch gekennzeichnet, dass** in Schritt b1) die Identifikationsinformationen (ID1) des Hauptnutzers (1) eine E-Mail-Adresse, einen Namen und/ oder eine Telefonnummer enthalten.

12. Zugangsverfahren gemäß einem der Ansprüche 1 bis 11, **dadurch gekennzeichnet, dass** der für das Fahrzeug (3) definierte Hauptschlüssel (MK) dem Hauptnutzer (1) zugeordnet ist und geändert wird, wenn das Fahrzeug (3) mit einem neuen Hauptnutzer verbunden wird.

13. Zugangsverfahren gemäß einem der Ansprüche 1 bis 12, **dadurch gekennzeichnet, dass** die elliptische Verschlüsselungskurve (EC) eine elliptische Diffie-Hellman-Kurve ist.

14. Zugangssystem (100) zu einem Fahrzeug (3), umfassend:
- das Fahrzeug (3), das von verschiedenen Benutzern gefahren werden kann, einschließlich eines Hauptnutzers (1) und eines Sekundärnutzers (2), das mit einer schlüssellosen Zugangsgerät (4) ausgerüstet ist und bei dem ein Hauptschlüssel (MK), ein Primärschlüssel (K1), ein Sekundärschlüssel (K2) sowie ein Tertiärschlüssel (K3) gespeichert sind;
- ein Daten-Fernserver (30), der Serverdaten (SD) speichert, darunter die Informationen zur Identifikation (ID1) des Hauptnutzers (1), eine elliptische Verschlüsselungskurve (EC), den Hauptschlüssel (MK), den Primärschlüssel (K1), den Sekundärschlüssel (K2) und den Tertiärschlüssel (K3) ; und
- ein erstes persönliches Gerät (10), das dem Hauptnutzer (1) gehört und eine App (A10) umfasst, die konfiguriert ist, um sich mit dem schlüssellosen Zugangsgerät (4) und dem Server (30) zu verbinden und das die elliptische Verschlüsselungskurve (EC) und die Identifikationsinformationen (ID1) des Hauptnutzers (1) speichert;
in dem das Fahrzeug (3), der Server (30) und das erste persönliche Gerät (10) konfiguriert sind, um die Zugangsverfahren gemäß Anspruch 1 umzusetzen.

15. Zugangssystem (100) gemäß Anspruch 14, **dadurch gekennzeichnet, dass** das Zugangssystem (100) ein zweites persönliches Gerät (20), das dem Sekundärnutzer (2) gehört, und eine App (A20) umfasst, die konfiguriert ist, um sich mit dem schlüssellosen Zugangsgerät (4) und zu verbinden und die die Identifikationsinformationen (ID2) und die elliptische Verschlüsselungskurve (EC) speichert; und dadurch dass das Fahrzeug (3), der Server (30) und das erste persönliche Gerät (10) konfiguriert sind, um die Zugangsverfahren gemäß Anspruch 2 umzusetzen.

16. App (A10, A20), die konfiguriert ist, um auf einem persönlichen elektronischen Gerät (10, 20) installiert und ausgeführt zu werden, wobei die App (A10, A20) Code-Abschnitte enthält, um die einzelnen Schritte des Zugangsverfahrens gemäß einem der Ansprüche 1 bis 14 umzusetzen, wenn die App (A10, A20) auf dem persönlichen elektronischen Gerät (10, 20) ausgeführt wird.

## Claims

1. A vehicle access method (3), comprising a preliminary phase including the following steps:
a1) provide the vehicle (3), which can be driven by different users, including a primary user (1) and a secondary user (2), which is equipped with a keyless entry system (4), and which stores a master key (MK), a primary key (K1), a secondary key (K2), and a tertiary key (K3);
a2) provide a remote data server (30), which stores server data (SD) including identification information (ID1) of the primary user (1), an elliptic encryption curve (EC), the master key (MK), the primary key (K1), the secondary key (K2) and the tertiary key (K3);
a3) provide a first personal device (10) which belongs to the primary user (1), which includes an application (A10) that is configured to connect to the keyless entry system (4) and to the server (30), and which stores the identification information (ID1) of the primary user (1) and the elliptic encryption curve (EC);
the access method subsequently comprising a data exchange phase including the following successive steps:
b1) the application (A10) installed on the first personal device (10) sends the identification information (ID1) of the primary user (1) to the server (30);
b2) the server (30) recognizes the identification information (ID1) of the primary user (1);
b3) the server (30) generates encrypted server data (KEC[SD]) using the elliptic encryption curve (EC) for the encryption, the encrypted server data (KEC[SD]) including the secondary key (K2), the tertiary key (K3), and an encrypted master key (K1[MK]) using the primary key (K1) for the encryption;
b4) the server (30) sends the encrypted server data (KEC[SD]) to the first personal device (10);
b5) the first personal device (10) uses the elliptic encryption curve (EC) to decrypt the encrypted server data (KEC[SD]), such that the first personal device (10) stores the secondary key (K2), the tertiary key (K3), and the encrypted master key (K1[MK]);
the access method subsequently comprising an access phase including the following successive steps:
c1) the application (A10) installed on the first personal device (10) establishes a secure connection with the vehicle (3), implementing the tertiary key (K3);
c2) if the secure connection procedure is successful, the application (A10) installed on the first personal device (10) transmits the encrypted master key (K1[MK]) to the vehicle (3);
c3) the vehicle (3) uses the primary key (K1) to decrypt the encrypted master key (K1[MK]);
c4) after decryption, the vehicle (3) recognizes the master key (MK) and controls the keyless entry system (4), such that the primary user (1) can access the vehicle using the application (A10) installed on the first personal device (10).

2. A vehicle access method (3), comprising a preliminary phase including the following steps:
a1) provide the vehicle (3), which can be driven by different users, including a primary user (1) and a secondary user (2), which is equipped with a keyless entry system (4), and which stores a master key (MK), a primary key (K1), a secondary key (K2), and a tertiary key (K3);
a2) provide a remote data server (30), which stores server data (SD) including identification information (ID1) of the primary user (1), an elliptic encryption curve (EC), the master key (MK), the primary key (K1), the secondary key (K2) and the tertiary key (K3);
a3) provide a first personal device (10) which belongs to the primary user (1), which includes an application (A10) that is configured to connect to the keyless entry system (4) and to the server (30), and which stores the identification information (ID1) of the primary user (1) and the elliptic encryption curve (EC);
a4) provide a second personal device (20) which belongs to the secondary user (2), which includes an application (A20) that is configured to connect to the keyless entry system (4), and which stores the identification information (ID2) of the secondary user (2) and the elliptic encryption curve (EC);
the access method subsequently comprises a data exchange phase including the following successive steps:
b1) the application (A10) installed on the first personal device (10) sends the identification information (ID1) of the primary user (1) to the server (30);
b2) the server (30) recognizes the identification information (ID1) of the primary user (1);
b3) the server (30) generates encrypted server data (KEC[SD]) using the elliptic encryption curve (EC) for the encryption, the encrypted server data (KEC[SD]) including the secondary key (K2), the tertiary key (K3), and an encrypted master key (K1[MK]) using the primary key (K1) for the encryption;
b4) the server (30) sends the encrypted server data (KEC[SD]) to the first personal device (10);
b5) the first personal device (10) uses the elliptic encryption curve (EC) to decrypt the encrypted server data (KEC[SD]), such that the first personal device (10) stores the secondary key (K2), the tertiary key (K3), and the encrypted master key (K1[MK]);
b6) the application (A20) installed on the second personal device (20) sends the identification information (ID2) of the secondary user (2) to the application (A10) installed on the first personal device (10);
b7) the primary user (1) agrees to lend the vehicle (3) to the secondary user (2);
b8) the application (10) installed on the first personal device (10) generates access data (AK), including the encrypted master key (K1[MK]);
b9) the application (10) installed on the first personal device (10) generates encrypted access data (K2[AK]), using the secondary key (K2) for the encryption;
b10) the application (10) installed on the first personal device (10) generates encrypted mobile data (KEC[MD]) using the elliptic encryption curve (EC) for the encryption, the encrypted mobile data (KEC[MD]) including the tertiary key (K3), and the encrypted access data (K2[AK]);
b11) the application (A10) installed on the first personal device (10) transmits the encrypted mobile data (KEC[MD]) to the application (A20) installed on the second personal device (20);
b12) the application (A20) installed on the second personal device (20) uses the elliptic encryption curve (EC) to decrypt the encrypted mobile data (KEC[MD]), such that the second personal device (20) stores the tertiary key (K3), and the encrypted access data (K2[AK]);
the access method subsequently comprises an access phase including the following successive steps:
d1) the application (A20) installed on the second personal device (20) establishes a secure connection with the vehicle (3), implementing the tertiary key (K3);
d2) if the secure connection procedure is successful, the application (A20) installed on the second personal device (20) transmits the encrypted access data (K2[AK]) to the vehicle (3);
d3) the vehicle (3) uses the secondary key (K2) to decrypt the encrypted access data (K2[AK]);
d4) after decryption, the vehicle (3) recognizes the access data (AK) and controls the keyless entry system (4), such that the secondary user (2) can access the vehicle using the application (A20) installed on the second personal device (20).

3. Access method according to claim 2, **characterized in that** step b7) is implemented manually by the primary user (1) using the application (A10) installed on the first personal device (10).

4. Access method according to claim 2 or 3, **characterized in that** in step b7), the primary user (1) defines conditions (AC) for accessing the vehicle (3), for example an established period of time, and **in that** in step b8) the access data (AK) include, on the one hand, the encrypted master key (K1[MK]) by using the primary key (K1) for the encryption and, on the other hand, the predefined access conditions (AC).

5. Access method according to claim 2 to 4, **characterized in that** in step b6), the identification information (ID2) of the secondary user (2) include an email address, a name and/or a telephone number.

6. Access method according to claim 2 to 5, **characterized in that** the application (A20) installed on the second personal device (20) is configured to connect to the server (30), under certain conditions.

7. Access method according to claim 2 to 6, **characterized in that** the second personal device (20) is a mobile telephone.

8. Access method according to claim 2 to 6, **characterized in that** the second personal device (20) is an electronic watch, a digital tablet, or a passive entry card.

9. Access method according to claim 1 to 8, **characterized in that** the first personal device (10) is a mobile telephone.

10. Access method according to claim 1 to 8, **characterized in that** the first personal device (10) is an electronic watch, a digital tablet, or a passive entry card.

11. Access method according to claim 1 to 10, **characterized in that** in step b1), the identification information (ID1) of the primary user (1) include an email address, a name and/or a telephone number.

12. Access method according to claim 1 to 11 , **characterized in that** the master key (MK) defined for the vehicle (3) is attributed to the primary user (1) and is modified when the vehicle (3) is associated with a new primary user.

13. Access method according to claim 1 to 12, **characterized in that** the elliptic encryption curve (EC) is a Diffie-Hellman elliptic curve.

14. Access system (100) for a vehicle (3), comprising:
- the vehicle (3), which can be driven by different users, including a primary user (1) and a secondary user (2), which is equipped with a keyless entry system (4), and which stores a master key (MK), a primary key (K1), a secondary key (K2), and a tertiary key (K3);
- a remote data server (30), which stores server data (SD) including identification information (ID1) of the primary user (1), an elliptic encryption curve (EC), the master key (MK), the primary key (K1), the secondary key (K2), and the tertiary key (K3); and
- a first personal device (10) which belongs to the primary user (1), which includes an application (A10) configured to connect to the keyless entry system (4) and to the server (30), and which stores the elliptic encryption curve (EC) and the identification information (ID1) of the primary user (1);
wherein the vehicle (3), the server (30), and the first personal device (10) are configured in such a way as to implement the access method according to claim 1.

15. Access system (100) according to claim 14, **characterized in that** the access system (100) comprises a second personal device (20) which belongs to the secondary user (2), which includes an application (A20) configured to connect to the keyless entry device (4), and that stores the identification information (ID2) of the secondary user (2) and the elliptic encryption curve (EC); and wherein the vehicle (3), the server (30), the first personal device (10), and the second personal device (20) are configured in such a way as to implement the access method according to claim 2.

16. A software application (A10; A20), configured in such a way as to be installed and running on a personal electronic device (10; 20), the application (A10; A20) comprising portions of code in order to implement the steps of the access method according to one of claims 1 to 14, when the application (A10; A20) is running on the personal electronic device (10; 20).
